# EUROPÄISCHE PATENTANMELDUNG

(11) **EP 1 035 501 A2**
(43) Veröffentlichungstag der Anmeldung: **13.09.2000**
(21) Anmeldenummer: 00103459.4
(22) Anmeldetag: 29.02.2000
(51) Int. Cl.: G06K 17/00, G06K 13/14, G06K 13/063, G06K 13/067, G06K 1/12

(54) **Handhabungssystem für Informationskarten**

(30) Priorität: 01.03.1999 DE 19908823
(71) Anmelder: Beta Research GmbH, 85774 Unterföhring (DE)
(72) Erfinder: Mester, Roland, 81827 München (DE)
(74) Vertreter: Heselberger, Johannes

(57) **Zusammenfassung**

Verfahren und Vorrichtung zur Handhabung von Informationskarten, insbesondere zur Programmierung von Karten oder Magnetkarten, in einer Vorrichtung, wobei Informationskarten in dieser Vorrichtung geführt werden, wobei die Vorrichtung Seitenflächen, eine Innenfläche und einen Auslaß aufweist, und die Informationskarten durch einen Auslaß in der Vorrichtung ausgestoßen werden, und wobei der Ausstoß von Informationskarten durch den Auslaß der Vorrichtung mit Hilfe mindestens einer Druckluftdüse gegenüber dem Auslaß durchgeführt wird.

## Beschreibung

Die vorliegende Erfindung betrifft ein Verfahren und Vorrichtungen zur automatisierten Handhabung von Informationskarten, insbesondere zur Programmierung von Chipkarten oder Magnetkarten.

Informationskarten, wie Magnetkarten und Chipkarten sind nach der ISO 7816 genormt. Sie bestehen aus einem Kartenträger aus Kunststoff und einem Magnetstreifen oder Chip. Derartige Karten werden bisher auf Fließbändern unter Verwendung von Druckfedern, Schiebern und Gummirollen in automatischen Prozessen, wie zum Beispiel im Herstellungs- oder Programmierungsprozeß, transportiert. Dieser Transportvorgang, zu dem auch Schritte wie die Vereinzelung von Karten gehören, ist aufgrund möglicher elektrostatischer Aufladung der Karten und geringer Reibungskoeffizienten der verwendeten Trägermaterialien schwierig und deshalb im Vergleich zu eigentlichen Prozessaufgaben, wie zum Beispiel der Programmierung, auch sehr langsam.

Außerdem ist diese Art des Kartentransports sehr problemanfällig. Durch Verschmutzung und Alterung der für den Transport zuständigen Gummirollen verändert sich bei diesen der Reibungskoeffizient. Dies führt dazu, daß die Gummirollen die Karten nicht mehr so gut greifen und damit auch nicht zuverlässig transportieren können. Auch die Kontakte zur Programmierung der Informationskarten verschmutzen bei diesem Verfahren relativ schnell und verursachen dadurch fehlerhafte Programmierungen. Schließlich können Änderungen an der Oberflächenbeschichtung der Karten schnell zur Inkompatibilität mit den Reibrollen und den anderen Bewegungsmitteln führen.

Die Aufgabe der Erfindung ist deshalb die Bereitstellung von einem Verfahren und von Vorrichtungen zur schnelleren und sichereren Handhabung von Informationskarten in automatischen Prozessen.

Die Lösung dieser Aufgabe besteht in dem Verfahren und den Vorrichtungen wie sie in den unabhängigen Ansprüchen beschrieben sind.

Erfindungsgemäß wird ein Verfahren zur Handhabung von Informationskarten, insbesondere zur Programmierung von Chipkarten oder Magnetkarten, bereitgestellt das folgende Schritte aufweist: Die Führung von Informationskarten in einer Vorrichtung, wobei die Vorrichtung Seitenflächen, eine Endfläche und einen Auslaß aufweist, und den Ausstoß von Karten durch den Auslaß der Vorrichtung, wobei der Ausstoß von Informationskarten durch den Auslaß der Vorrichtung mit Hilfe mindestens einer gegenüber dem Auslaß angeordneten Druckluftdüse durchgeführt wird.

Bei jeder automatischen Handhabung von Informationskarten werden diese transportiert. Dieser Transport wird erfindungsgemäß nicht mehr mechanisch mit Druckfedern, Schiebern, Gummirollen und dergleichen, sondern von mindestens einer Druckluftdüse unterstützt und damit auch beschleunigt. Diese Druckluftdüse ist gegenüber dem Auslaß der Vorrichtung angeordnet, bläst also gewissermaßen die Karte aus der Vorrichtung hinaus, nachdem sie beispielsweise in der Vorrichtung programmiert wurde. Der Druckluftstrom kann dabei die Karte senkrecht zu deren Hauptfläche oder auch schräg dazu angreifen. Es muß lediglich ein Impuls entstehen, der die Karte durch den Auslaß treibt.

Die Informationskarten befinden sich in einer Vorrichtung, die die Karten in einem Stapel ausrichtet. Erfindungsgemäß besteht die Vorrichtung aus mindestens zwei Seitenflächen zur seitlichen Führung des Kartenstapels und einer Endfläche die als Anschlag für den Stapel, etwa als Bodenfläche dient. In dieser Vorrichtung kann eine Bearbeitung der Karten, etwa eine Programmierung von Chipkarten durch eine an der Endfläche angebrachte Programmiereinheit stattfinden. Denkbar sind aber auch Vorrichtungen in denen die Karten, in einer Art Zwischenpuffer, gesammelt werden, bevor sie an den nächsten Prozessschritt weitergeleitet werden. Der Stapel von Informationskarten kann im Einzelfall auch nur aus einer einzelnen Karte bestehen, etwa auf einem Fließband auf dem die Karte mit Hilfe seitlicher Führungsflächen positioniert ist.

Die Vorrichtung kann vertikal oder horizontal stehen oder jede andere Lage im Raum einnehmen. Im Rahmen der Erfindung wird vertikale Anordnung, bei der die Karten übereinander gestapelt werden, bevorzugt, da hierbei die Bestückung der Führung ohne Arbeitsstop am einfachsten zu realisieren ist und die Karten die Endfläche, an der etwa eine Bearbeitung vorgenommen wird, alleine schon durch die Schwerkraft erreichen, so daß weitere Kontaktmittel zur Herstellung eines Kontakts zwischen Karte und Endfläche nicht notwendig sind. Eine horizontale Anordnung der Vorrichtung wäre aber auch denkbar, wenn etwa der Auslaß nach unten gerichtet ist und die Karten in der Vorrichtung etwa durch eine Federanordnung gegen die Endfläche gedrückt werden. Die jeweils auszustoßende letzte Karte des Stapels könnte dann mit Hilfe des erfindungsgemäß verwendeten Druckluftstoßes aus einer gegenüber dem Auslaß angebrachten Druckluftdüse von der nächsten Karte in dem Stapel und von der Endfläche gelöst und durch den Auslaß aus der Vorrichtung entfernt werden.

Durch den Auslaß, normalerweise eine Öffnung in der Führung, verläßt die Karte die Vorrichtung zur weiteren Bearbeitung. Die Karte wird hier durch den Druckluftstrom bzw. Druckluftimpuls aus der Vorrichtung ausgestoßen. Denkbar ist an sich auch, daß die Karte durch ein Vakuum aus der Vorrichtung gezogen bzw. angesaugt wird. Ein derartiger Sog kann auch den Druck des Luftstroms unterstützen.

Druckluftdüse bedeutet im Rahmen der vorliegenden Anmeldung jede Öffnung, unabhängig von deren Form und Größe, aus der ein Luftstrom oder Luftimpuls ausgegeben werden kann. Auch die Zusammensetzung der Luft ist frei wählbar. Die Stärke der Druckluft kann unterschiedlich sein. Sie kann auch abhängig von der Art der Karte individuell zugewiesen werden, so daß die Karte nach dem Ausstoß von unterschiedlichen Einheiten aufgenommen werden kann. Beispielsweise ist es denkbar, daß die Weiterbehandlungseinheiten für verschiedene Karten in einem unterschiedlichen Abstand von der Vorrichtung angebracht sind und der Druckluftstrom oder -impuls in Abhängigkeit von der Zuweisung der konkreten Karte zu einer dieser Weiterbehandlungseinheiten gewählt wird, also die Karten etwa verschieden weit ausgestoßen werden.

Vorzugsweise wird eine Informationskarte von der nächsten Informationskarte in der Vorrichtung durch Druckluft aus einer Druckluftdüse getrennt. Diese Druckluftdüse wird so ausgerichtet, daß sich zwischen den beiden Karten ein Luftkissen bildet. Regelmäßig ist diese Düse gegenüber dem Auslaß angeordnet und bläst zwei benachbarte Karten vorzugsweise schräg an. Die Größe dieses Luftkissens und damit auch der Abstand zwischen den beiden Karten ist abhängig von der Intensität der Druckluft der Druckluftdüse. Durch diesen Abstand wird verhindert, daß die Karte, die mit der Hilfe von Druckluft ausgestoßen werden soll, von den anderen Karten dabei behindert wird. Der Abstand wird dabei so groß gewählt, daß nebeneinander liegende Karten so getrennt werden, daß der zum Ausstoßen der Karte verwendete Druckluftstrom oder -impuls die jeweils auszustoßende Karte sicher aus der Vorrichtung treibt.

Vorzugsweise wird eine Informationskarte unter Verwendung mindestens einer Druckluftdüse von der Endfläche der Vorrichtung getrennt. Diese Druckluftdüse wird so ausgerichtet, daß sich auch zwischen der Karte und der Endfläche ein Luftkissen bildet. Dabei kann die Druckluftdüse sowohl in der Endfläche, als auch seitlich angebracht sein. Auch hier ist die Größe des Luftkissens und damit auch der Abstand zwischen der Karte und der Endfläche von der Intensität der Druckluft abhängig. Die Intensität der Druckluft wird so gewählt, daß der Abstand zwischen Karte und Endfläche so groß ist, daß die Karte, die mit der Hilfe von Druckluft ausgestoßen wird, von der Endfläche nicht dabei behindert wird. Die Druckluft zur Bildung des Luftkissens kann dabei als kontinuierlicher Strom oder auch als Impuls bereitgestellt werden, je nachdem ob die Karte die Endfläche der Vorrichtung berühren soll oder nicht bzw. mit welcher Gewichtskraft sie diese kontaktieren soll. Diese Anforderungen hängen wiederum von der Aufgabenstellung der Vorrichtung ab, etwa Kontaktierung der Karte an der Endfläche zum Zweck der Programmierung oder einfach Zwischenlagerung des Kartenstapels zum Weitertransport.

Vorzugsweise wird die Position von Informationskarten in der Vorrichtung mit Hilfe von mindestens einer Lichtschranke kontrolliert. Mit der Hilfe dieser Lichtschranken wird erfindungsgemäß festgestellt, wie groß der Abstand zwischen der auszustoßenden Karte und der Endfläche und/oder wie groß der Abstand zwischen der auszustoßenden Karte und den anderen Karten ist. Auf der Grundlage dieser Ergebnisse kann dann die Intensität der Druckluft aus den entsprechenden Druckluftdüsen geregelt werden, damit weder die Endfläche noch die anderen Karten die auszustoßende Karte auf dem Weg zum Auslaß behindern bzw. damit die Position der Karte im Verhältnis zur Endfläche, etwa für die Programmierung, richtig gewählt ist. Zu diesem Zweck werden mehrere Lichtschranken vorzugsweise senkrecht zum Kartenweg in der Vorrichtung, das heißt in Ebenen parallel zur Endfläche installiert. Über die Fläche der Karte werden bevorzugt mindestens zwei Lichtschrankeneinheiten verteilt, so daß auch die Neigung der Karte in der Vorrichtung erfaßt werden kann. Die Lichtschrankeneinheiten selber können aus mehreren Lichtschranken bestehen, um verschiedene Höhen der auszustoßenden Karte und der anderen Karte erkennen zu können. Denkbar sind hier auch andere Einrichtungen zur Feststellung des Abstands, wie zum Beispiel die Verwendung von Ultraschall oder der Messung von Lichtreflexionen an der Karte.

Vorzugsweise wird die Informationskarte die am nächsten an der Endfläche liegt durch eine Progrmmiereinheit in oder an der Endfläche programmiert. Die Programmiereinheit besteht unter anderem aus Kontakten in oder an der Endfläche, die die Programmierungsdaten an die Informationseinheit der Karte übertragen. Diese Informationseinheit ist zum Beispiel der Chip einer Chipkarte, oder der Magnetstreifen einer Magnetkarte. Zu diesem Zweck müssen die Karten in der Führung so angeordnet sein, daß die Informationseinheiten der Karten von der Endfläche aus zugänglich sind. Im Regelfall wird daher die Karte derart in der Vorrichtung gestapelt sein, daß sich der Magnetstreifen oder der Chip auf der Seite der Endfläche befindet.

Vorzugsweise werden Informationskarten in der Vorrichtung dadurch ausgerichtet, daß Druckluft aus einer Druckluftdüse in ein Loch oder mehrere Löcher in den Informationskarten eingeblasen wird. Zu diesem Zweck sind die Karten in der Vorrichtung so gestapelt, daß die Löcher der Karten übereinander liegen. Bei ausreichender Intensität der Druckluft richten sich die Karten so aus, daß die Löcher deckungsgleich übereinander und möglichst genau über der Druckluftdüse liegen. Mit Hilfe dieser Löcher können die Karten beispielsweise, unabhängig von ihren Abmessungen, in der Vorrichtung so positioniert werden, daß die Informationseinheit der Karte über den Kontakten der Programmierungseinheit liegt. Dafür müssen bei den Karten die Löcher so angeordnet sein, daß sie immer die gleiche Position zu der Informationseinheit haben. Damit müssen die Karten zum Beispiel die Seitenflächen der Vorrichtung nicht unbedingt berühren um in der Vorrichtung sicher geführt zu sein. Dies kann bei geeigneter Zuführung der Karten zur Vorrichtung allein durch den Druckluftstrahl geschehen.

In einer besonders bevorzugten Ausführungsform der Erfindung weist die Karte mindestens zwei Löcher auf, die voneinander beabstandet sind, so daß eine Ausrichtung und Führung der übereinander- bzw. nebeneinander liegenden Karten in eindeutiger Weise erfolgen kann. Vorzugsweise werden dann mindestens zwei Druckluftströme verwendet.

Vorzugsweise werden die Informationskarten, nachdem sie den Auslaß der Vorrichtung passiert haben, durch Druckluft aus mindestens einer Druckluftdüse sortiert. Damit ermöglicht das Verfahren durch nur einen Auslaß nicht nur das Ausstoßen der Karten in Weiterbehandlungseinheiten in einem unterschiedlichen Abstand von der Vorrichtung, sondern auch in Einheiten die sich in einem anderen Winkel zum Ausstoßweg der Karten befinden. Durch die verschiedenen Sortiermöglichkeiten können beispielsweise defekte Karten und ordnungsgemäß programmierte Karten unterschiedlich weiterbehandelt werden. Es können jedoch auch intakte Karten unterschiedlicher Größe oder unterschiedlichen Gewichts oder einfach Karten für unterschiedliche Verwendungen an verschiedene Weiterbehandlungseinheiten übergeben werden. Die dazu verwendete Druckluftdüse befindet sich vorzugsweise nach dem Auslaß senkrecht zur Bewegungsrichtung der ausgestoßenen Karten.

Die vorliegende Erfindung bezieht sich auch auf eine Vorrichtung zur Handhabung von Informationskarten, insbesondere zur Programmierung von Chipkarten oder Magnetkarten, wobei die Vorrichtung Seitenflächen und eine Endfläche zur Führung der Informationskarten und einen Auslaß für einzelne Informationskarten aufweist, wobei die Vorrichtung mindestens eine Druckluftdüse gegenüber des Auslaßes zum Ausstoß von Informationskarten durch den Auslaß aufweist. Vorzugsweise weist die Vorrichtung mindestens eine Druckluftdüse zur Vereinzelung von Informationskarten in der Vorrichtung auf In einer bevorzugten Ausführunsform weist die Vorrichtung mindestens eine Druckluftdüse zur Erzeugung eines Abstandes der Informationskarten von der Endfläche der Vorrichtung auf.

Vorzugsweise beinhaltet die Vorrichtung mindestens eine Lichtschranke zur Kontrolle der Position von Informationskarten in der Vorrichtung. Weiter bevorzugt weist die Vorrichtung eine Programmiereinheit, die an der Endfläche angeordnet ist, zur Programmierung der Informationseinheit (Magnetstreifen, Chip) der Informationskarten auf.

Vorzugsweise weist die Vorrichtung mindestens eine Druckluftdüse an der Endfläche zur Positionierung der Infonnationskarten in der Vorrichtung durch Einblasen eines Druckluftstromes in Löcher in den Informationskarten auf. Eine weitere bevorzugte Ausführungsform der Erfindung beinhaltet mindestens eine Druckluftdüse zur Sortierung der Informationskarten, nachdem diese den Auslaß passiert haben.

Die vorliegende Erfindung bezieht sich auch auf eine Informationskarte mit einem Trägermaterial und mindestens einer programmierbaren Informationseinheit, wobei die Informationskarte mindestens eine angeschrägte Seite aufweist. Diese angeschrägte Seite an der Informationskarte erleichtert die Trennung einer Karte von den anderen Karten durch den Druckluftstrom oder -impuls. Durch diese Schräge wird es der Druckluft vereinfacht, Luft zwischen die zu vereinzelnde Karte und die anderen Karten zu bringen und dadurch ein Luftpolster zu bilden. Dabei ist es grundsätzlich nicht relevant, in welche Richtung die Karte angeschrägt ist, oder ob die Anschrägung gerade oder gebogen geformt oder etwa abgestuft ist.

Vorzugsweise weist die Karte mindestens ein Loch auf Es kann ein einzelnes Loch sein, mehrere Löcher oder ein ganzes Gitter von Löchern. Diese Löcher sollen vorzugsweise so angeordnet sein, daß sie immer die gleiche Position zu der Informationseinheit, also dem Magnetstreifen oder dem Chip, haben. In diesem Fall können nämlich die Karten mit Hilfe des Luftstroms durch die Löcher in Relation zu einer Programmiereinheit an der Endfläche der Vorrichtung ausgerichtet werden. Hierzu müssen die Löcher bei den in der Vorrichtung gestapelten Karten so übereinander liegen, daß die Druckluft aus der Druckluftdüse durch alle Karten hindurch geht und der von den Löchern gebildete Luftschacht nicht von Kartenmaterial verschlossen wird.

Vorzugsweise hat mindestens ein Loch der Informationskarte eine geformte Kontur, in der Regel eine umlaufende Abrundung oder Ansebrägung. Durch die geformte Kontur kann die Druckluft noch besser ihre Kraft ansetzen und die Karten richtig positionieren.

Vorzugsweise besteht das Trägermaterial der Karte aus Pappe. Hierdurch ist eine elektrostatische Aufladung und damit auch ein Zusammenkleben der Karten kaum mehr möglich. Außerdem werden die Karten dadurch leichter und können deshalb besser mit der Druckluft transportiert werden.

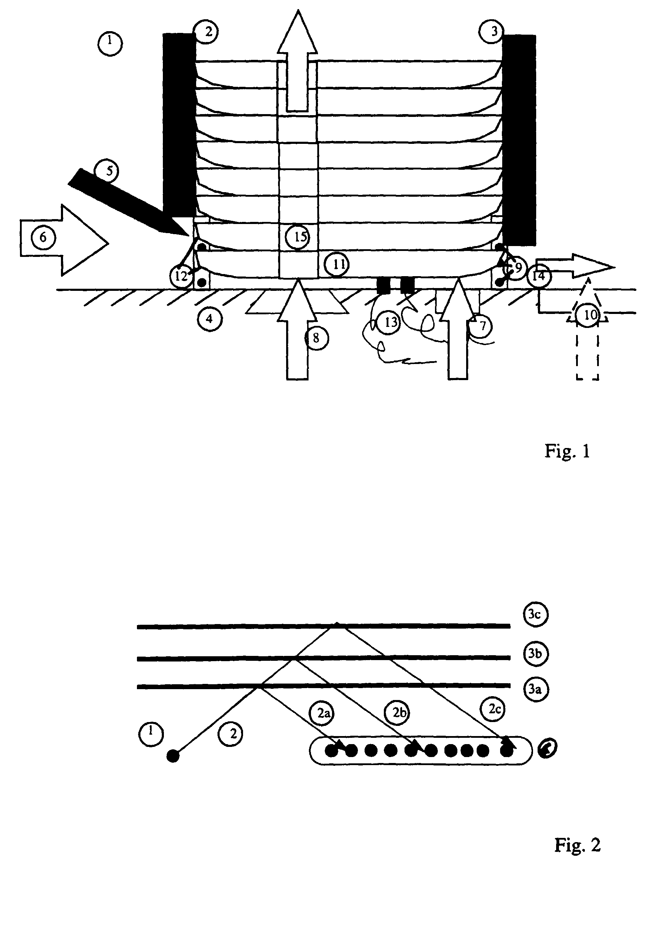

Die vorliegende Erfindung wird beispielhaft in Figur 1 dargestellt. Figur 1 zeigt eine erfindungsgemäße Vorrichtung zur Programmierung von Chipkarten.

Die Vorrichtung 1 umfaßt unter anderem Seitenflächen 2, 3 zur Führung von Chipkarten 11 in der Vorrichtung 1. In dieser Führung liegen die Chipkarten 11 übereinander auf der Endfläche 4 der Vorrichtung 1. Durch die Druckluftdüse 8 unter den Löchern 15 in den Chipkarten 11 werden diese zueinander ausgerichtet und in der Vorrichtung richtig positioniert. Die unterste Chipkarte liegt dadurch mit dem Chip auf der Programmierungseinheit 13, die hier in der Endfläche 4 dargestellt ist, und kann programmiert werden. Nach der Programmierung durch die Programmiereinheit 13 wird unter der untersten Chipkarte unter Verwendung der Druckluftdüse 7 ein Luftkissen gebildet. Zusätzlich wird unter Verwendung der Druckluftdüse 5 und der angeschrägten Seite 12 zwischen der untersten Chipkarte und den restlichen Chipkarten ein weiteres Luftkissen gebildet. Die unterste Karte wird dadurch sozusagen vereinzelt. Dabei kontrollieren Lichtschranken 14, die in Ebenen parallel zur Endfläche 4 angeordnet sind, die Dicke der beiden Luftpolster und die Position der untersten Karte. Wenn die unterste Chipkarte in der zum Ausstoß geeigneten Position ist, wird sie durch Druckluft aus der Druckluftdüse 6 durch den Auslaß 9 der Vorrichtung 1 ausgestoßen. Wenn die IstPosition der Karte nicht deren Soll-Position entspricht, kann mittels eines Regelkreises die Stärke des Luftstromes aus der Düse 7 und/oder der Düse 5 so verändert werden, daß die Soll-Position erreicht wird. Nach dem Auslaß 9 können die ausgestoßenen Chipkarten unter Verwendung einer Druckluftdüse 10 selektiert werden. Diese Selektion kann dadurch erreicht werden, daß ein gleichbleibender Luftstrom oder Luftimpuls auf verschiedene Karten einwirkt, oder auch dadurch, daß der Luftstrom oder -impuls in Abhängigkeit von kartenspezifischen Daten, die etwa von der Programmiereinheit 13 zur Verfügung gestellt werden, gesteuert wird.

In Figur 2 wird beispielhaft die Abstandsmessung unter Verwendung von Lichtreflexionen dargestellt. Dabei wird ein Lichtstrahl 2 aus einer Lichtquelle 1 schräg gegen die Unterseite einer Karte 3 gerichtet. In Abhängigkeit davon, in welchem Abstand sich die Karte befindet (siehe die Positionen 3a, 3b und 3c) wird der Lichtstrahl unterschiedlich reflektiert (vergleiche Pfeile 2a, 2b und 2c). Alle reflektierten Strahlen werden durch die Kartenunterseite zu einer Leiste mit Fotodetektoren 4 gespiegelt. In Abhängigkeit davon, welcher Fotodetektor einen Lichtstrahl aufnehmen kann, kann festgestellt werden, in welchem Abstand sich die Karte befindet.

Die vorliegende Erfindung stellt damit ein Verfahren und Vorrichtungen zur einfachen und schnellen Handhabung von Informationskarten, wie Magnetkarten und Chipkarten, zur Verfügung.

## Patentansprüche

1. Verfahren zur Handhabung von Informationskarten (11), insbesondere zur Programmierung von Chipkarten oder Magnetkarten, in einer Vorrichtung (1) das mindestens folgende Schritte aufweist:
- Führung von Informationskarten (11) in einer Vorrichtung (1), wobei die Vorrichtung (1) Seitenflächen (2, 3), eine Endfläche (4) und einen Auslaß (9) aufweist,
- Ausstoß von Informationskarten (11) durch den Auslaß (9) der Vorrichtung (1),
**dadurch gekennzeichnet, daß**
die Informationskarte (11) die am nächsten an der Endfläche (4) liegt durch eine Programmierungseinheit (13) in oder an der Endfläche (4) programmiert wird, und
der Ausstoß von Informationskarten (11) durch den Auslaß (9) der Vorrichtung (1) mit Hilfe mindestens einer Druckluftdüse (6) gegenüber dem Auslaß (9) durchgeführt wird.

2. Verfahren nach Anspruch 1, dadurch gekennzeichnet, daß eine Informationskarte (11) von der nächsten Informationskarte (11) in der Vorrichtung (1) durch Druckluft aus einer Druckluftdüse (5) getrennt wird.

3. Verfahren nach einem der Ansprüche 1 oder 2, dadurch gekennzeichnet, daß eine Informationskarte (11) mit Hilfe mindestens einer Druckluftdüse (7) von der Endfläche (4) der Vorrichtung (1) getrennt wird.

4. Verfahren nach einem der Ansprüche 1 bis 3, dadurch gekennzeichnet, daß die Position von Informationakarten (11) in der Vorrichtung (1) mit Hilfe von mindestens einer Lichtschranke (14) kontrolliert wird.

5. Verfahren nach einem der Ansprüche 1 bis 4, dadurch gekennzeichnet, daß Informationskarten (11) in der Vorrichtung (1) dadurch ausgerichtet werden, daß Druckluft aus einer Druckluftdüse (8) in Löcher (15) in den Informationskarten (11) eingeblasen wird.

6. Verfahren nach einem der Ansprüche 1 bis 5, dadurch gekennzeichnet, daß die Informationakarten (11) nachdem sie den Auslaß (9) der Vorrichtung (1) passiert haben durch Druckluft aus mindestens einer Druckluftdüse (10) sortiert werden.

7. Vorrichtung (1) zur Handhabung von Informationskarten (11), insbesondere zur Programmierung von Chipkarten oder Magnetkarten, wobei die Vorrichtung (1) Seitenflächen (2, 3) und eine Endfläche (4) zur Führung der Informationskarten (11) aufweist, und wobei die Vorrichtung (1) einen Auslaß (9) für einzelne Informationskarten (11) aufweist,
**dadurch gekennzeichnet, daß**
die Vorrichtung (1) eine Programmierinheit (13) an der Endfläche (4) zur Programmierung der Informationskarte (11), die am nächsten an der Endfläche (4) liegt, aufweist, und
die Vorrichtung (1) mindestens eine Druckluftdüse (6) gegenüber dem Auslaß (9) zum Ausstoß von Informationskarten (11) durch den Auslaß (9) aufweist.

8. Vorrichtung (1) nach Anspruch 8, gekennzeichnet durch mindestens eine Druckluftdüse (5) zur Vereinzelung von Informationskarten (11) in der Vorrichtung (1).

9. Vorrichtung (1) nach einem der Ansprüche 8 oder 9, gekennzeichnet durch mindestens eine Druckluftdüse (7) zur Erzeugung eines Abstandes der Informationskarten (11) von der Endfläche (4) der Vorrichtung (1).

10. Vorrichtung (1) nach einem der Ansprüche 8 bis 10, gekennzeichnet durch mindestens eine Lichtschranke (14) zur Kontrolle der Position von Informationskarten (11) in der Vorrichtung (1).

11. Vorrichtung (1) nach einem der Ansprüche 7 bis 10 gekennzeichnet durch mindestens eine Druckluftdüse (8) an der Endfläche (4) zur Positionierung der Informationskarten (11) in der Vorrichtung (1) durch Einblasen eines Druckluftstromes in Löcher (15) in den Informationskarten (11).

12. Vorrichtung (1) nach einem der Ansprüche 7 bis 11, gekennzeichnet durch mindestens eine Druckluftdüse (10) zur Sortierung von Informationskarten (11) nachdem diese den Auslaß (9) passiert haben.

13. Informationskarte (11) mit einem Trägermaterial und mindestens einer programmierbaren Informationseinheit,
**dadurch gekennzeichnet, daß**
die Informationskarte (11) mindestens eine angeschrägte Seite (12) und mindestens ein Loch (15)aufweist.

14. Informationskarte (11) nach Anspruch 13, dadurch gekennzeichnet, daß mimdestens ein Loch (15) eine geformte Kontur aufweist.

15. Informationskarte (11) nach einem der Ansprüche 13 oder 14, dadurch gekennzeichnet, daß es sich bei dem Trägermaterial um Pappe handelt.
